(19) Europäisches Patentamt
European Patent Office
Office européen des brevets

(11) Veröffentlichungsnummer : **0 092 723**
**B1**

(12) **EUROPÄISCHE PATENTSCHRIFT**

(45) Veröffentlichungstag der Patentschrift : **10.09.86**

(51) Int. Cl.⁴ : **C 08 G 75/02**

(21) Anmeldenummer : **83103475.6**

(22) Anmeldetag : **11.04.83**

(54) **Verfahren zur Herstellung von hochmolekularen, gegebenenfalls verzweigten Polyarylensulfiden.**

(30) Priorität : **23.04.82 DE 3215259**

(43) Veröffentlichungstag der Anmeldung : **02.11.83 Patentblatt 83/44**

(45) Bekanntmachung des Hinweises auf die Patenterteilung : **10.09.86 Patentblatt 86/37**

(84) Benannte Vertragsstaaten : **BE DE FR GB IT NL**

(56) Entgegenhaltungen :
**EP-A- 0 023 313**
**EP-A- 0 023 314**
**EP-A- 0 065 689**
**EP-A- 0 075 769**
**DE-B- 2 453 485**
**US-A- 4 096 132**
**CHEMICAL ABSTRACTS, Vol. 96, No. 24, 14. Juni 1982, Columbus, Ohio, USA. GAO, X. et al.: "Study on polyarylene sulfides. II. Preparation, structures and physical properties of polyarylene sulfides", page 9, column 1, abstract-no. 200293s**
**CHEMICAL ABSTRACTS, Vol. 94, No. 8, 23. Februar 1981, Columbus, Ohio, USA. A. LIAO et al.: "Study on poly-(arylene sulfide)s. I. Preparation structures and thermal properties of poly(phenylene sulfide)s", page 3, column 2, abstract-no. 47811w**
**CHEMICAL ABSTRACTS, Vol. 92, No. 22, 2. Juni 1980, Columbus, Ohio, USA. A. B. PORT et al.: "Synthesis and characterization of poly(arylene sulfides). Part 1. Poly(phenylene sulfide), poly(2-methylphenylene sulfide) and poly(2,6-dimethylphenylene sulfide)", page 3, column 1, abstract no. 181716f**

(73) Patentinhaber : **BAYER AG**
**Konzernverwaltung RP Patentabteilung**
**D-5090 Leverkusen 1 Bayerwerk (DE)**

(72) Erfinder : **Ostlinning, Edgar, Dr.**
**Rembrandtstrasse 37**
**D-4000 Düsseldorf (DE)**
Erfinder : **Idel, Karsten, Dr.**
**Scheiblerstrasse 81**
**D-4150 Krefeld (DE)**

EP 0 092 723 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Polyarylensulfide und ihre Herstellung sind bekannt. (Siehe beispielsweise US-Patente 25 38 941, 25 13 188, 38 76 592, 33 54 129, DE-AS 24 53 749, DE-OS 26 23 363, US-Patente 40 38 261, 40 38 259, 40 38 263, DE-OS 26 23 362, US-Patent 40 38 262, DE-OS 26 23 333, US-Patente 40 64 114, 40 38 260, 40 39 518, JA-OS 55-54 330, Ja-OS 75 123 799, US-Patente 31 17 620, 35 24 835 und 38 39 301 sowie DE-OS 29 30 710, DE-OS 29 30 797 und DE-OS 30 19 732.

Bei vielen dieser Verfahren erhält man keine hochmolekularen, thermoplastisch verarbeitbaren Polyarylensulfide, man braucht einen an die Reaktion anschließenden Härtungs- oder Curingschritt, bei dem über Kettenverlängerungs- und Verzweigungsreaktionen die Eigenschaften verbessert werden.

Sofern nach dem bekannten Verfahren des Standes der Technik hochmolekulare, thermoplastisch verarbeitbare Polyarylensulfide erhalten werden (siehe die genannten DE-OS 29 30 710, DE-OS 29 30 797 und DE-OS 30 19 732, sind hierbei spezielle Katalysatoren erforderlich sowie Reaktionstemperaturen anzuwenden, die häufig über dem Siedepunkt der polaren Lösungsmittel liegen, wodurch die Reaktion unter Anwendung von Überdruck durchgeführt werden muß.

Gemäß JA-PS 75 123 799 wird Hexamethylphosphorsäuretriamid als Cosolvenz neben N-Methylpyrrolidon (2) in einer Druckreaktion bei der Herstellung von Polyarylensulfiden benutzt.

In der US-PS 38 76 592 werden Polyarylensulfide in Phosphorsäureamiden durch Umsetzung von $P_2S_5$, Alkali- oder Erdalkalihydroxiden und Polyhalogenaromaten hergestellt. So werden in einer Druckreaktion in Ausbeuten von weniger als 60 % bezogen auf Polyhalogenaromat Polyarylensulfide hergestellt, die nicht hochmolekular aufgebaut sind.

In US-Patent 40 39 518 wird u. a. Hexamethylphosphoramid als Lösungsmittel für die Herstellung von Polyphenylensulfid empfohlen. Ein Ausführungsbeispiel liegt dafür nicht vor. Allgemein wird jedoch gefordert, daß der Druck genügend sein muß, um das p-Dihalogenbenzol und das Amid im wesentlichen flüssig zu halten (Spalte 2, Zeilen 64/66).

Gemäß US-PS 3 354 129 werden jedoch auch bei Ansätzen bei hohen Temperaturen und unter Druck keine thermoplastisch verarbeitbaren Produkte erhalten.

Demgegenüber wurde nun gefunden, daß hochmolekulare, gegebenenfalls verzweigte Polyarylensulfide ohne Anwendung von Überdruck erhalten werden, wenn man in an sich bekannter Weise Polyhalogenaromaten und Alkalisulfide in cyclischen phosphororganischen Verbindungen, bevorzugt 1-Alkyl-1-oxo-phospholanen, evtl. in Anwesenheit eines Katalysators und/oder eines Cosolvenz kondensiert. Die erhaltenen Polyarylensulfide können ohne Härtungsschritt formgepreßt, extrudiert und zu Fasern versponnen werden.

Die Synthese dieser cyclischen phosphororganischen Verbindungen ist aus den Patentschriften EP-OS 0 006 220 und US-PS 2 663 739 bekannt.

Gegenstand der Erfindung ist somit ein Verfahren zur Herstellung von hochmolekularen, gegebenenfalls verzweigten Polyarylensulfiden aus

a) Dihalogenbenzolen von denen 50 bis 100 Mol-% der Formel (1)

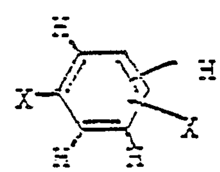

(I)

entsprechen und 0 bis 50 Mol-% der Formel (II)

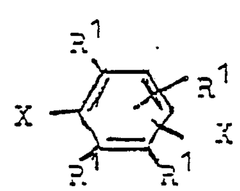

(II)

wobei

X Fluor, Chlor, Brom und Jod, vorzugsweise Chlor und Brom ist und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, wobei das molare Verhältnis meta- zu para-Dihalogenaromaten der Verbindungen (I) bzw.

(II) höchstens 30 : 70 ist und

b) 0 bis 2,4 Mol-% bevorzugt 0,4 bis 2,0 Mol-%, bezogen auf die Dihalogenbenzole, eines Tri- oder Tetrahalogenaromaten der Formel (III)

$$ArX_n \qquad (III)$$

wobei

Ar ein aromatischer oder heterocyclischer Rest mit 6-24 C-Atomen ist,

X die gleiche Bedeutung wie in Formel (I) und (II) hat, und

n 3 oder 4 ist, und

c) Alkalisulfiden, bevorzugt Natrium- oder Kaliumsulfid oder deren Mischung, bevorzugt in Form der Hydrate oder wäßriger Mischungen, gegebenenfalls zusammen mit Alkalihydroxiden, wobei das molare Verhältnis von (a + b) : c im Bereich von

0,85 : 1 bis 1,15 : 1, vorzugsweise

0,95 : 1 bis 1,05 : 1, liegt in

d) einem organischen Lösungsmittel, gegebenenfalls unter Mitverwendung von Katalysatoren und/oder Cosolventien, wobei das molare Verhältnis von Alkalisulfiden c) zu dem organischen Lösungsmittel d) im Bereich von 1 : 2 bis 1 : 15 liegt und das Verfahren bei einer Reaktionszeit von bis zu 10 Stunden, einer Reaktionstemperatur von 160 °C bis 240 °C, vorzugsweise von 165 °C bis 225 °C und ohne Anwendung von Überdruck durchgeführt wird, dadurch gekennzeichnet, dass cyclische phosphororganische Verbindungen der Formel IV

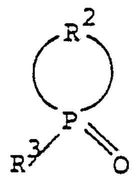

(IV)

in der

$R^2$ einen α,ω-Butylen oder α,ω-Pentylenrest und

$R^3$ einen $C_1$-$C_8$-Alkyl-, $C_6$-$C_{12}$-Aryl-, $C_7$-$C_{20}$-Ar-alkyl- oder $C_5$-$C_{10}$-Cycloalkyl-Rest bedeutet, als organisches Lösungsmittel d) eingesetzt werden.

Als gegebenenfalls mitzuverwendende Katalysatoren können Substanzen, die dem Stand der Technik entsprechen, in den üblichen Mengen eingesetzt werden, beispielsweise seien hier Alkalifluoride, Alkaliphosphate und Alkalicarboxylate erwähnt.

Als gegebenenfalls mitzuverwendende Cosolventien können N,N-Dialkylcarbonsäureamide von $C_1$-$C_{18}$-aliphatischen und $C_6$-$C_{12}$-aromatischen Carbonsäuren in einer Menge von 0,02-1,0 Mol, bezogen auf 1 Mol Alkalisulfid, mitverwendet werden.

Die Art und Menge der einzusetzenden Alkalisulfide entspricht dem Stande der Technik. Es sind z. B. Lithium-, Natrium-, Kalium- und Rubidiumsulfid geeignet, wobei Natrium- und Kaliumsulfid bevorzugt werden. Als gegebenenfalls zur Regenerierung der Alkalisulfide aus eventuell vorhandenen Hydrogensulfiden einzusetzende Alkalihydroxide seien LiOH, NaOH und KOH genannt. Es können in beiden Fällen auch Mischungen sowohl der Sulfide als auch der Hydroxide eingesetzt werden.

Die Alkalisulfide können in einem oder mehreren Schritten, beispielsweise durch Abdestillieren des Wassers aus der Reaktionslösung, entwässert werden. Die partielle Entwässerung sollte vor der Zugabe der p-Dihalogenverbindungen der Formel (I) und (II) abgeschlossen werden.

Eventuell als Cosolvenz verwendete N,N-Dialkylcarbonsäureamide werden bevorzugt vor der Entwässerung der Alkalisulfide eingesetzt. Es ist jedoch prinzipiell möglich, die Cosolventien zusammen mit den Polyhalogenverbindungen zu dem entwässerten Ansatz zu geben.

Das Zusammengeben der Reaktanten kann im Prinzip in beliebiger Form erfolgen. Die Dihalogenaromaten der Formeln (I) und (II) und die Tri- bzw. Tetrahalogenaromaten der Formel (III) können zusammen oder getrennt, kontinuierlich, in Portionen oder direkt auf einmal zu dem Alkalisulfid, dem Lösungsmittel oder einem Teil davon gegeben werden.

Das erfindungsgemäß einzusetzende molare Verhältnis von meta- zu para-Dihalogenaromaten der Verbindungen (I) bzw. (II) soll höchstens 30 : 70 sein.

Zur Erhaltung von thermoplastisch verarbeitbaren Polyphenylensulfiden werden besonders bevorzugt p-Dihalogenaromaten eingesetzt.

Es können aber auch das Alkalisulfid zusammen mit dem Lösungsmittel oder einem Teil davon zu den Verbindungen der Formeln (I), (II) und (III) gegeben werden. Es können auch alle Reaktanten direkt zusammengegeben werden. Jede andere Kombination der Reaktanten ist ebenfalls möglich.

Beispiele für die erfindungsgemäß einzusetzenden Dihalogenaromaten der Formel (I) sind : p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol, 1-Brom-4-jodbenzol, 1,3-Difluorbenzol, 1,3-Dichlorbenzol, 1,3-Dibrombenzol, 1,3-Dijodbenzol, 1-Fluor-3-chlorbenzol, 1-Fluor-3-brombenzol, 1-Fluor-3-jodbenzol, 1-Chlor-3-brombenzol, 1-Chlor-3-brombenzol, 1-Chlor-3-jodbenzol und 1-Brom-3-jodbenzol. Sie sind allein oder im Gemisch miteinander verwendbar. Besonders bevorzugt sind 1,4-Dichlorbenzol und/oder 1,4-Dibrombenzol.

Beispiele für die erfindungsgemäß einzusetzenden Dihalogenaromaten der Formel (II) sind : 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol, 1-Cyclohexyl-3,5-dichlorbenzol und 1-Phenyl-3,5-difluor-benzol. Sie sind allein oder im Gemisch miteinander einsetzbar.

Beispiele für die erfindungsgemäß einzusetzenden Tri- bzw. Tetrahalogenaromaten der Formel (III) sind : 1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Di-, Tri- und Tetrahalogenaromaten können sowohl simultan als auch getrennt der Reaktionsphase zugesetzt werden.

Erfindungsgemäß geeignete cyclische phosphororganische Verbindungen sind p-substituierte Phospholane und p-substituierte Phosphane. Geeignete p-Substituenten sind $C_1$-$C_8$-Alkyle, $C_6$-$C_{12}$-Aryle, $C_7$-$C_{20}$-Aralkyle und $C_5$-$C_{10}$-Cycloalkyle, vorzugsweise $C_1$-$C_4$-Alkyle.

Erfindungsgemäß einzusetzende cyclische phosphororganische Verbindungen sind die der Formel (IV).

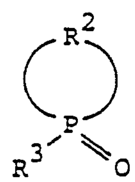

(IV)

in der

$R^2$ einen $\alpha,\omega$-Butylen- oder $\alpha,\omega$-Pentylenrest, der auch substituiert sein kann, besonders bevorzugt jedoch einen $\alpha,\omega$-Butylenrest bedeutet und

$R^3$ einen $C_1$-$C_8$-Alkyl-, einen $C_6$-$C_{12}$-Aryl-, einen $C_7$-$C_{20}$-Aralkyl-Rest oder einen $C_5$-$C_{10}$-Cycloalkyl-Rest, besonders bevorzugt einen $C_1$-$C_4$-Alkyl-Rest bedeutet.

Erfindungsgemäß bevorzugt geeignete Verbindungen der Formel (IV) sind 1-Methyl-1-oxo-phospholan, 1-Ethyl-1-oxo-phospholan, 1-Phenyl-1-oxo-phospholan, 1-Methyl-1-oxo-phosphan, 1-Propyl-1-oxo-phosphan und 1-Phenyl-1-oxo-phosphan genannt.

Die Reaktionszeit kann bis zu 10 Stunden betragen, liegt vorzugsweise zwischen 0,2 und 8 Stunden. Eine stufenweise Steigerung der Reaktionstemperatur während dieser Zeit ist von Vorteil.

Die Druckverhältnisse bei der Reaktion entsprechen dem normalen Luftdruck, eine Anwendung von Überdruck ist nicht erforderlich, kann aber erfolgen, wobei Überdrucke von 0,1 bar bis 20 bar in Frage kommen können.

Die Aufarbeitung des Reaktionsgemisches und die Isolierung der Polyarylensulfide kann in bekannter, mannigfaltiger Weise erfolgen.

Das Polyarylensulfid kann direkt aus der Reaktionslösung oder erst nach Zugabe, z. B. von Wasser und/oder verdünnte Säuren, nach üblichen Verfahrensweise abgetrennt werden, beispielsweise durch Filtration oder durch Zentrifugieren.

Nach der Filtration schließt sich im allgemeinen zur Entfernung von anorganischen Bestandteilen, die den Polymeren anhaften können, wie z. B. Reste Alkalisulfide und Alkalichloride, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschließende Wäsche, wie oben beschrieben, gewonnen werden.

Die erfindungsgemäßen Polyarylensulfide können auch mit anderen Polymeren, so wie mit Pigmenten und Füllstoffen, wie beispielsweise Graphit, Metallpulver, Glaspulver, Quarzmehl oder Glasfasern gemischt oder mit den für Polyarylensulfide üblichen Additiven, wie beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5 kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität ηm der Polymerschmelze (in Pa.s) bei 306 °C in Abhängigkeit von der Schubspannung (in Pa.s) mit Hilfe des Instron-Rotations-viskosimeters bestimmt.

Man kann auf diese Weise die Schmelzviskosität in einem sehr weiten Bereich von $10^{-1}$ bis $10^{7}$ Pa.s genau bestimmen. In dem Instrom-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron ; Durchmesser des Kegels und der Platte 2 cm.

Angegeben wird die Schmelzviskosität, die bei einer Schubspannung von $\tau = 10^2$ Pa gemessen wird.

Die erfindungsgemäßen p-Polyarylensulfide besitzen direkt nach der Isolierung aus dem Reaktionsgemisch im allgemeinen Schmelzviskositäten von $0{,}5 \times 10^3$ bis $5 \times 10^5$ Pa.s oder auch höher, vorzugsweise aber von $1{,}5 \times 10^3$ bis $10^4$ Pa.s. Sie können direkt durch Extrusion, Extrusionsblasen, Spritzgießen oder sonst übliche Verarbeitungstechniken zu Folien, Formkörpern oder Fasern verarbeitet werden, welche in üblicher Weise Verwendung finden als Automobilteile, Armaturen, Elektroteile, z. B. Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile etc.

## Vergleichsbeispiel 1

Dieses Beispiel beschreibt zum Vergleich die Herstellung von Polyphenylensulfid gemäß US-PS 3 354 129.

In einem mit Rührer ausgerüsteten Autoklaven wurden 129 g Natriumsulfid-trihydrat (entsprechend 1 Mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C heruntergekühlt und 147 g p-Dichlorbenzol (≙ 1 Mol) in ca. 50 g N-Methyl-2-pyrrolidon hinzugefügt. Man erwärmt das Reaktionsgemisch unter dem Stickstoffvordruck von 2,5 bar in 30 Minuten auf 245 °C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird. Man trocknet bei 80 °C im Vakuum und erhält 100,3 g (93 %) Poly-p-phenylensulfid mit hellbrauner Farbe und folgenden Kenndaten, Schmelzviskosität $\eta_m = 4{,}5$ Pa · s (bei $\tau = 10^2$ Pa). Eine thermoplastiche Verarbeitung ist ohne Härtung nicht möglich.

## Vergleichsbeispiel 2

Dieses Beispiel beschreibt zum Vergleich die Herstellung von p-Polyphenylensulfid gemäß JA-PS 55 54 330 (Asahi Dow K.K. vom 21.04.1980) Beispiel 2.

In einem 500 ml Reaktionsgefäß mit $N_2$-Einlaß und Gasphasenauslaß wurden 36,06 g (≙ 0,15 Mol) Natriumsulfid nonahydrat und 150 ml N,N'-Dimethylethylenharnstoff eingewogen. Das Gemisch wurde mit Stickstoff gespült und langsam auf 200-225 °C erwärmt. Dabei wurden 25,9 g Destillat, das hauptsächlich aus Wasser bestand, erhalten. Nach dem Abkühlen des Reaktionsgefäßes wurden 22,15 g (≙ 0,15 Mol) p-Dichlorbenzol zugegeben. Unter $N_2$-Spülung wurde bei Normaldruck auf 220-225 °C aufgeheizt. Nach 4 h wurde das Reaktionsgemisch in ungefähr 500 ml Methanol entleert und das Produkt durch Filtration abgetrennt. Das rohe Produkt wurde 4 h in etwa 1 l dest. Wassers bei 70 °C gewaschen. Nach der Filtration wurde es 2 h bei 50 °C in Methanol gewaschen, filtriert und bei 100 °C im Vakuum getrocknet. 9,39 (57,9 %) hellgraues Produkt mit einer Schmelzviskosität von $\eta_m = 0{,}7$ Pa.s (bei $\tau = 10^2$ Pa) wurden erhalten.

## Beispiel 1

48,7 g Natriumsulfidtrihydrat (≙ 0,37 Mol) und 2,64 g NaOH gelöst in 19,2 g $H_2O$ wurden zusammen mit 150 g 1-Methyl-1-oxo-phospholan vorgelegt und das Gemisch bei Temperaturen bis 210 °C unter Inertgasatmosphäre entwässert. Es destillierten 38,7 g einer Flüssigkeit ab, die im wesentlichen aus Wasser bestand. Danach wurde der Ansatz abgekühlt und mit 56,85 g (≙ 0,387 Mol) p-Dichlorbenzol und 1,07 g (1,6 Mol-%) 1,2,4-Trichlorbenzol gelöst in 35 g 1-Methyl-1-oxo-phospholan versetzt. Sodann wurde 8 Stunden zum Rückfluß erhitzt. Dabei stieg die Temperatur im Reaktionsgemisch von anfänglichen 170 °C auf 220 °C an. Der Ansatz wurde nach dem Abkühlen in 1 l dest. Wasser gegeben und das Polyarylensulfid nach Ansäuern durch Filtration abgetrennt. Nach der Vakuumtrocknung bei 120 °C wurden 34,8 g (≙ 85,9 % bzg. auf Natriumsulfid) Produkt isoliert.

Die Schmelzviskosität betrug $\eta_m = 3\,200$ Pa.s ($\tau_m = 10^2$ Pa).

## Beispiel 2

48,7 g Natriumsulfidtrihydrat, (= 0,37 Mol) 2,64 g NaOH gelöst in 19,2 g $H_2O$ und 18,9 g Lithiumacetatdihydrat (50 Mol-% bzw. auf Natriumsulfid) wurden zusammen mit 150 g 1-Methyl-1-oxo-phospholan vorgelegt und entwässert. Die weitere Verfahrensweise entsprach Beispiel 1. Es wurden 32,4 g Produkt mit einer Schmelzviskosität von $\eta_m$ = 7 860 Pa.s (bei $\tau = 10^2$ Pa) erhalten.

Beispiel 3

48,7 g Natriumsulfidtrihydrat (≙ 0,37 Mol), 10,05 g NaOH gelöst in 25 g $H_2O$ und 16,1 g Dimethylacetamid (50 Mol-% bzg. Natriumsulfid) wurden zusammen mit 150 g 1-Methyl-1-oxo-phospholan vorgelegt und entwässert. Die weitere Arbeitsweise entspricht Beispiel 1. Es wurden 33,6 g Produkt mit einer Schmelzviskosität von $\eta_m$ = 11 000 Pa.s (bei $\tau = 10^2$ Pa) isoliert.

**Patentansprüche**

1. Verfahren zur Herstellung von hochmolekularen gegebenenfalls verzweigten Polyarylensulfiden aus

a) Dihalogenbenzolen, von denen 50 bis 100 Mol-% der Formel I

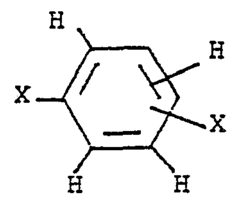

(I)

entsprechen, und 0 bis 50 Mol-% der Formel II

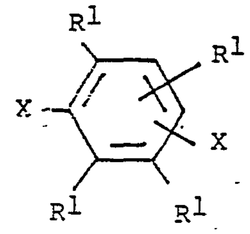

(II)

wobei

X Fluor, Chlor, Brom und Jod und

$R^1$ gleich oder verschieden ist und Wasserstoff $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{25}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, wobei das molare Verhältnis meta- zu para-Dihalogenaromaten der Verbindungen (I) bzw. (II) höchstens 30 : 70 ist, und

b) 0 bis 2,4 Mol-%, bezogen auf die Dihalogen-benzole eines Tri- oder Tetrahalogenaromaten der Formel III

$$ArX_n \qquad (III)$$

wobei

Ar ein aromatischer oder heterocyclischer Ring mit 6-24 C-Atomen ist,

X die gleiche Bedeutung wie in Formel I und II hat, und

n 3 oder 4 ist, und

c) Alkalisulfiden, wobei das molare Verhältnis von (a + b) : c im Bereich von 0,85 : 1 bis 1,15 : 1 liegt, in

d) einem organischen Lösungsmittel, gegebenenfalls unter Mitverwendung von Katalysatoren und/oder Cosolventien, wobei das molare Verhältnis von Alkalisulfiden c) und organischen Lösungsmittel d) im Bereich von 1 : 2 bis 1 : 15 liegt und das Verfahren bei einer Reaktionszeit bis zu 10 Stunden, einer Reaktionstemperatur von 160 °C bis 240 °C durchgeführt wird,

dadurch gekennzeichnet, daß cyclische phosphororganische Verbindungen der Formel IV

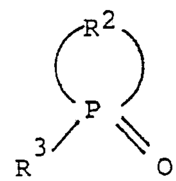

(IV)

in der

$R^2$ einen α,ω-Butylen oder α,ω-Pentylenrest und

$R^3$ einen $C_1$-$C_8$-Alkyl-, $C_6$-$C_{12}$-Aryl-, $C_7$-$C_{20}$-Ar-alkyl- oder $C_5$-$C_{10}$-Cycloalkyl-Rest bedeutet, als organisches Lösungsmittel d) eingesetzt werden.

2. Verfahren nach Anspruch 1, dadurch gekennzeichnet, daß man bei Temperaturen von 165 °C bis 225 °C arbeitet.

3. Verfahren gemäß Ansprüchen 1 und 2, dadurch gekennzeichnet, daß Verbindungen der Formel IV eingesetzt werden, in der $R^2$ einen α,ω-Butylen-Rest und $R^3$ einen $C_1$-$C_4$-Alkyl-Rest bedeutet.

**Claims**

1. Process for the production of high molecular weight, optionally branched polyarylene sulphides from

a) dihalogen benzenes of which 50 to 100 mol % correspond to the formula I

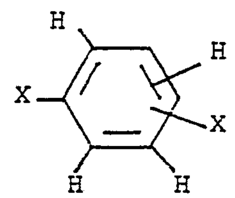

(I)

and 0 to 50 mol % to the formula II

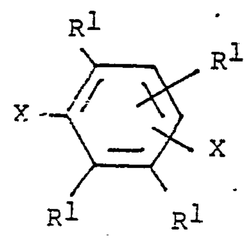

(II)

wherein

X is fluorine, chlorine, bromine and iodine and

$R^1$ is identical or different and can be hydrogen, $C_1$-$C_{20}$-alkyl, $C_5$-$C_{20}$-cycloalkyl, $C_6$-$C_{24}$-aryl, $C_7$-$C_{24}$-alkaryl or $C_7$-$C_{25}$-aralkyl, and/or two radicals $R^1$ can be linked to form an aromatic or heterocyclic ring, and always at least one radical $R^1$ is different from hydrogen, the molar ratio of meta- to para-dihalogen aromatics of the compounds (I) and (II) being at most 30 : 70, and

b) 0 to 2.4 mol %, based on the dihalogen benzenes, of a tri- or tetrahalogenaromatic of the formula III

$$ArX_n \qquad (III)$$

wherein

Ar is an aromatic or heterocyclic ring with 6-24 C atoms,

X has the same meaning as in formula I and II, and n is 3 or 4, and

c) alkali metal sulphides, the molar ratio of (a + b) : c being in the range from 0.85 : 1 to 1.15 : 1, in

d) an organic solvent, optionally using catalysts and/or co-solvents, the molar ratio of alkali metal sulphides c) and organic solvents d) being in the range from 1 : 2 to 1 : 15, and the process being carried out with a reaction time of up to 10 hours, at a reaction temperature of 160 °C to 240 °C, characterised in that cyclic organophosphorus compounds of the formula IV

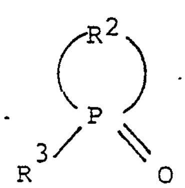

(IV)

in which

$R^2$ denotes an α,ω-butylene or α,ω-pentylene radical and

$R^3$ denotes a $C_1$-$C_8$-alkyl, $C_6$-$C_{12}$-aryl, $C_7$-$C_{20}$-aralkyl or $C_5$-$C_{10}$-cycloalkyl radical,

are used as the organic solvent d).

2. Process according to Claim 1, characterised in that it is carried out at temperatures of 165 °C to 225 °C.

3. Process according to Claims 1 and 2, characterised in that compounds of the formula IV are used in which $R^2$ denotes an $\alpha,\omega$-butylene radical and $R^3$ denotes a $C_1$-$C_4$-alkyl radical.

**Revendications**

1. Procédé de fabrication de sulfures de polyarylène à poids moléculaire élevé, éventuellement ramifiés, à partir

a) de dihalogénobenzènes, dont 50 à 100 moles % correspondent à la formule I :

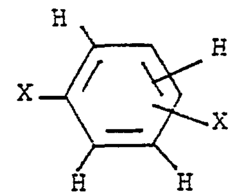

(I)

et 0 à 50 moles % à la formule II :

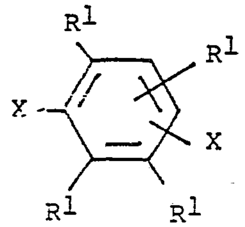

(II)

où

X est du fluor, du chlore, du brome et de l'iode et les

$R^1$ sont identiques ou différents et peuvent être de l'hydrogène, un alcoyle en $C_1$-$C_{20}$, un cycloalcoyle en $C_5$-$C_{20}$, un aryle en $C_6$-$C_{24}$, un alcaryle en $C_7$-$C_{24}$ ou un aralcoyle en $C_7$-$C_{25}$, et/ou bien deux radicaux $R^1$ peuvent être reliés en un noyau aromatique ou hétérocyclique, au moins un radical $R^1$ étant toujours autre chose que de l'hydrogène, le rapport molaire entre hydrocarbures aromatiques dihalogénés en position méta et en position para des composés (I) et (II) étant au plus de 30 : 70, et

b) de 0 à 2,4 moles %, par rapport aux benzènes dihalogénés, d'un hydrocarbure aromatique tri- ou tétrahalogéné de formule III

$$ArX_n \qquad (III)$$

dans laquelle

Ar est un noyau aromatique ou hétérocyclique ayant 6 à 24 atomes de carbone,

X a la même signification que dans les formules I et II, et

n est 3 ou 4, et

c) de sulfures alcalins, le rapport molaire de (a + b) : c se situant dans l'intervalle de 0,85 : 1 à 1,15 : 1 dans

d) un solvant organique, éventuellement avec utilisation conjointe de catalyseurs et/ou de co-solvants, le rapport molaire des sulfures alcalins c) et des solvants organiques d) se situant dans l'intervalle de 1 : 2 à 1 : 15 et le procédé étant exécuté pendant une durée de réaction allant jusqu'à 10 heures, à une température de réaction de 160 °C à 240 °C,

caractérisé en ce qu'on utilise comme solvant organique d) des composés phospho-organiques cycliques de formule IV :

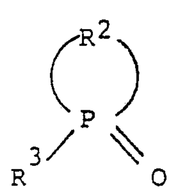

(IV)

dans laquelle

$R^2$ signifie un radical α,ω-butylène, ou α,ω-pentylène et

$R^3$ un radical alcoyle en $C_1$-$C_8$, aryle en $C_6$-$C_{12}$, aralcoyle en $C_7$-$C_{20}$ ou cycloalcoyle en $C_5$-$C_{10}$.

2. Procédé selon la revendication 1, caractérisé en ce qu'on opère à des températures de 165 °C à 225 °C.

3. Procédé selon les revendications 1 et 2, caractérisé en ce qu'on utilise des composés de formule IV dans laquelle $R^2$ signifie un radical α,ω-butylène et $R^3$ un radical alcoyle en $C_1$-$C_4$.